# FASCICULE DE BREVET EUROPEEN

(11) **EP 2 586 705 B1**
(45) Date de publication et mention de la délivrance du brevet: **16.04.2014**
(21) Numéro de dépôt: 12006809.3
(22) Date de dépôt: 28.09.2012
(51) Int. Cl.: B64D 25/18, B64C 27/20

(54) **Aéronef muni d'un système de flottabilité d'un élément tournant**
Luftfahrzeug, das mit einem Schwimmfähigkeitssystem eines Drehelements ausgestattet ist
Aircraft equipped with a buoyancy system of a rotating element

(30) Priorité: 27.10.2011 FR 1103269
(43) Date de publication de la demande: 01.05.2013
(73) Titulaire: Airbus Helicopters, 13725 Marignane Cedex (FR)
(72) Inventeur: Mailliu, Dominique, 13250 Saint Chamas (FR); Denante, Marc, 13007 Marseille (FR)
(74) Mandataire: Pouillot, Laurent Pierre Paul

(56) Documents cités:
- DE-A1- 19 820 260
- US-A- 3 547 377
- US-A1- 2004 129 831
- US-A1- 2004 226 498

## Description

La présente invention concerne un aéronef muni d'un système de flottabilité d'un élément tournant.

Dès lors, l'invention se situe dans le domaine technique des systèmes de flottabilité permettant l'amerrissage d'un aéronef, et plus particulièrement un aéronef comprenant un élément tournant susceptible d'impacter une surface liquide.

On entend notamment par «élément tournant » une hélice propulsive, ou encore un rotor arrière d'aéronef utilisé pour contrôler le mouvement en lacet de l'aéronef et/ou pour contrer le couple exercé par un rotor de sustentation sur un fuselage par exemple.

Un tel système de flottabilité de secours participe à la flottaison et la stabilité d'un aéronef lors d'un amerrissage forcé, pour permettre l'évacuation des occupants de cet aéronef. Tous les appareils voués aux missions de transport de personnes en zones maritimes sont équipés en principe d'un tel système de flottabilité.

Un système de flottabilité de secours comprend des flotteurs dont le déploiement est commandé soit par le pilote et/ou le copilote, soit par déclenchement automatique, notamment grâce à un détecteur d'immersion. Ces flotteurs peuvent comprendre des outres gonflées par un moyen de déploiement explosif ou électrique par exemple.

On connaît par l'intermédiaire du document WO 2008/054401, un système permettant de gonfler des coussins gonflables anti-crash, en tenant compte de l'attitude de l'aéronef et d'une vitesse excessive d'approche du sol.

On connaît aussi, par l'intermédiaire du document US 7,156,033 B2, un système de flottabilité associé à un moyen d'inhibition.

Le document FR 1 383 688 présente un hélicoptère muni de flotteurs gonflables.

Le document CA 02481789 suggère l'utilisation d'un capteur d'immersion associé à un capteur d'accélération pour déclencher le gonflement d'un flotteur.

On connaît aussi les documents US 3 547 377 A, DE 198 20 260 A1, US 2004/226498 A1, et US 2004/129831 A1.

Pour les aéronefs comprenant des éléments tournants, il est préférable d'éviter que ces éléments tournants n'entrent en contact avec la surface liquide.

Dans le cas d'un giravion, un rotor principal de sustentation voire de propulsion est suffisamment haut pour minimiser le risque d'interférence entre ce rotor principal et une surface liquide.

Par contre, le ou les éléments tournants qui remplissent la fonction anticouple pendant la phase d'amerrissage, tel qu'un rotor arrière caréné ou non ou des hélices, ont une position rendant possible un contact avec une surface liquide.

La présente invention a alors pour objet de proposer un aéronef muni d'un système de flottaison visant à maintenir l'aéronef sur une surface liquide voire à permettre la rotation d'éléments tournants de type rotor ou hélice lorsque l'aéronef repose sur la surface liquide.

Selon l'invention, un aéronef est muni d'au moins un élément tournant pourvu de pales susceptibles d'entrer en contact avec une surface liquide lors d'un amerrissage, ledit aéronef comprenant un système de flottabilité.

Cet aéronef est notamment remarquable en ce qu'il comporte un carénage entourant au moins partiellement l'élément tournant, ce carénage comprenant un flotteur gonflable de secours du système de flottabilité pour empêcher les pales d'entrer en contact avec la surface liquide dans une position gonflée.

Par conséquent, l'élément tournant est un organe au moins partiellement caréné de manière à présenter un carénage en regard d'une surface de contact tel qu'un sol ou une surface liquide, voire un organe totalement caréné tel qu'un rotor arrière caréné par exemple de type fenestron®, ou qu'une hélice carénée.

Le carénage comprend un flotteur pouvant être soit dans une position pliée durant un vol normal, soit dans une position gonflée lors d'un amerrissage.

Dans la position gonflée, le flotteur protège les pales de l'élément tournant pour éviter un contact entre ces pales et la surface liquide. Il est à noter que les pales peuvent rester entraînées en rotation lorsque l'aéronef a amerri de manière à remplir leur fonction, telle qu'une fonction anticouple notamment.

De plus, le flotteur améliore la stabilité de l'aéronef sur la surface liquide et réduit de fait les risques de dégradation des pales et de la chaîne de transmission de puissance reliant une installation motrice à l'élément tournant.

On comprend que le système de flottabilité peut de plus être muni d'autres organes gonflables de secours, agencés le long du fuselage par exemple. On se référera à la littérature pour obtenir des informations sur de tels organes.

De même, l'aéronef comprend des moyens pour déclencher le déploiement des divers flotteurs avant un amerrissage. Les moyens de l'état de la technique connus sont utilisables.

Cet aéronef peut comporter une ou plusieurs des caractéristiques qui suivent.

Par exemple, le carénage ayant une portion inférieure en regard du sol lorsque l'aéronef est posé sur le sol, le flotteur est plié dans cette portion inférieure hors phase d'amerrissage pour être dans une position pliée.

Durant un vol normal à savoir hors cas d'amerrissage, le flotteur est donc plié au sein du carénage, et plus précisément dans une portion inférieure de ce carénage pour pouvoir être déployée de manière adéquate le cas échéant.

On comprend que le carénage inclut une zone fusible pouyant être rompue lors du déploiement du flotteur.

Selon un autre aspect, l'aéronef comporte un moyen de gonflage pour déployer vers l'extérieur dudit élément tournant le flotteur dans la position gonflée avant un amerrissage, soit en dehors du volume délimité par le carénage dans lequel évolue les pales de l'élément tournant.

Cette caractéristique a pour but d'éviter un contact entre les pales de l'élément tournant et le flotteur durant l'amerrissage.

Conformément à une variante, le flotteur ayant successivement selon le sens de circulation de l'air au travers de l'élément tournant une portion amont puis une portion centrale disposée sous le carénage et une portion aval, l'aéronef comporte un moyen de gonflage pour déployer le flotteur avant un amerrissage en gonflant successivement la portion aval puis la portion centrale et la portion amont.

Cette séquence de gonflage permet de minimiser les risques qu'une partie du flotteur soit happé par l'élément tournant et déchiré par les pales de cet élément tournant.

Dès lors, le moyen de gonflage peut déboucher dans la portion aval, cette portion aval communiquant avec la portion centrale, la portion centrale communiquant avec la portion amont pour respecter la séquence de gonflage précitée.

Selon un autre aspect, pour optimiser la protection de l'élément tournant, le flotteur peut remonter le long du carénage de part et d'autre d'un plan vertical de symétrie, le plan vertical de symétrie passant par l'axe de rotation des pales de l'élément tournant et en contact avec la surface liquide à l'issue d'un amerrissage.

De plus, un plan horizontal contenant la surface liquide en l'absence de vague, lorsque le flotteur est dans une position gonflée, le flotteur peut remonter le long du carénage de part et d'autre d'un plan vertical de symétrie pour que ce plan horizontal soit à l'aplomb d'une extrémité libre des pales quand ces pales évoluent dans un secteur angulaire minimal donné.

Autrement dit, durant la rotation des pales autour de l'axe de rotation de l'élément tournant, l'extrémité libre de chaque pale peut passer sous la ligne de flottaison de l'aéronef, cette ligne de flottaison étant contenue dans le plan horizontal. On note que la forme du flotteur permet néanmoins d'éviter un contact entre cette extrémité libre et la surface liquide dans ledit secteur angulaire minimal donné.

Il devient alors possible de maximiser l'immersion de l'aéronef pour améliorer sa stabilité sur la surface liquide.

De manière surprenante, l'invention propose donc un flotteur permettant à une partie d'une pale d'un élément tournant de passer sous la ligne de flottaison d'un aéronef tout en empêchant cette partie d'entrer en contact avec la surface liquide.

A cet effet, le flotteur peut avoir une forme toroïdale en position gonflée, cette forme toroïdale étant générée en faisant effectuer une rotation d'une section en forme de C traversée par le carénage autour d'un axe de rotation des pales de l'élément tournant, une face concave de la section en forme de C étant dirigée vers cet axe de rotation.

L'invention et ses avantages apparaîtront avec plus de détails dans le cadre de la description qui suit avec des exemples de réalisation donnés à titre illustratif en référence aux figures annexées qui représentent :
- la figure 1, une vue d'un aéronef selon l'invention,
- la figure 2, une vue de face d'un élément tournant de l'aéronef ayant un flotteur en position pliée,
- la figure 3, une coupe d'un élément tournant de l'aéronef ayant un flotteur en position gonflée,
- la figure 4, une vue de face d'un élément tournant de l'aéronef ayant un flotteur en position gonflée,
- la figure 5 une coupe d'un flotteur plié dans un carénage,
- les figures 6 à 8 des coupes explicitant une séquence de gonflage du flotteur, et
- la figure 9, un vue tridimensionnelle d'un flotteur déployé.

Les éléments présents dans plusieurs figures distinctes sont affectés d'une seule et même référence.

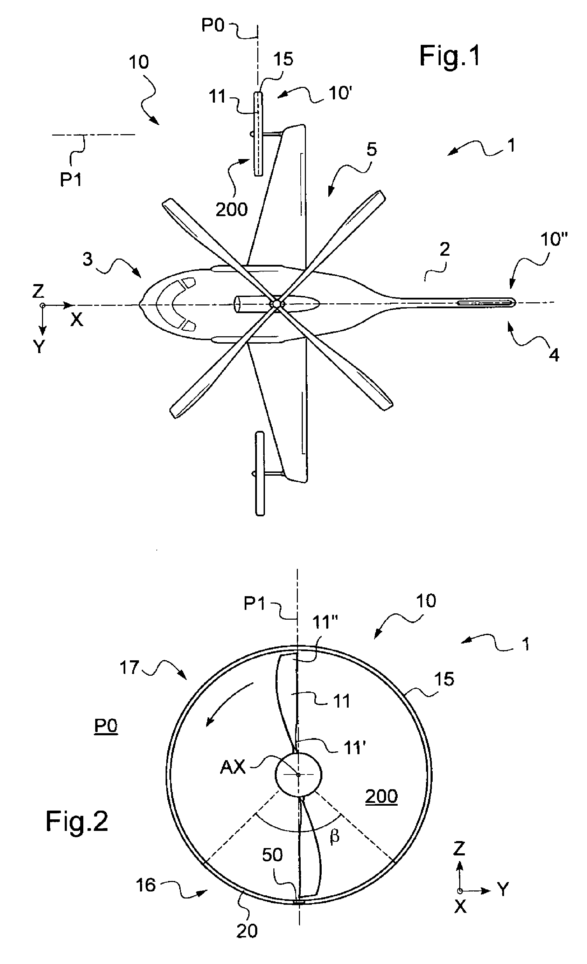

On note que trois directions X, Y et Z orthogonales les unes par rapport aux autres sont représentées sur les figures 1 à 4.

La première direction X est dite longitudinale. Le terme « longitudinal » est relatif à toute direction parallèle à la première direction X.

La deuxième direction Y est dite transversale. Le terme « transversal » est relatif à toute direction parallèle à la deuxième direction Y.

Enfin, la troisième direction Z est dite en élévation. L'expression « en élévation » est relative à toute direction parallèle à la troisième direction Z.

La figure 1 présente un aéronef 1 muni d'un fuselage 2 s'étendant longitudinalement d'une extrémité avant 3 vers une extrémité arrière 4.

Cet aéronef peut comprendre une voilure tournante 5.

Par ailleurs, l'aéronef comprend au moins un élément tournant 10 risquant d'entrer en contact avec une surface liquide lors d'un amerrissage, notamment en cas de fausses manoeuvres d'un pilote.

Un tel élément tournant 10 peut comprendre une hélice 10' apte à participer à la propulsion de l'aéronef et/ou au contrôle de mouvements en lacet de l'aéronef, ou encore un rotor arrière 10" participant au contrôle de mouvements en lacet de l'aéronef tel qu'un fenestron®. Cette liste n'est pas limitative, l'invention s'appliquant à tout type d'élément tournant muni d'une pluralité de pales 11.

Cet aéronef comprend de plus un système de flottabilité pour maintenir à flot l'aéronef sur une surface liquide, le système de flottabilité pouvant comprendre des organes gonflables fixés au fuselage 2 par exemple.

En référence à la figure 2, au moins un élément tournant 10 et avantageusement chaque élément tournant est alors muni d'un carénage 15, le carénage 15 délimitant la circonférence d'un volume 200 dans lequel évoluent les pales 11 de l'élément tournant considéré.

Par suite, les pales 11 d'un élément tournant s'étendent d'un pied 11' fixé à un moyeu vers une extrémité libre 11". Dès lors, sous l'impulsion du moyeu, les pales 11 effectuent un mouvement rotatif autour d'un axe de rotation AX, au sein d'un plan dénommé « plan vertical de rotation P0 » par commodité et dans le volume 200 délimité par le carénage 15.

Il est à noter que l'axe de rotation AX est contenu dans un plan dit « plan vertical de symétrie P1 », le plan vertical P1 étant perpendiculaire au plan vertical de rotation P0 et étant en contact avec la surface liquide à l'issue d'un amerrissage.

Le système de flottabilité inclut alors un flotteur 20 gonflable agencé dans le carénage 15 d'un élément tournant selon l'invention pour éviter une interférence entre une surface liquide et les pales 11 lors d'un amerrissage. Chaque élément tournant peut comprendre un tel flotteur.

Dans la position pliée représentée sur la figure 2, le carénage 15 comportant une portion inférieure 16 en regard du sol lorsque l'aéronef est posé et une portion supérieure 17, le flotteur est plié dans la portion inférieure 16.

Il est à noter que le carénage 15 peut entourer partiellement l'élément tournant, ce carénage comportant alors uniquement la portion inférieure 16 par exemple. Cette portion inférieure peut de plus selon une variante être réduite au secteur angulaire β contenant le flotteur 20.

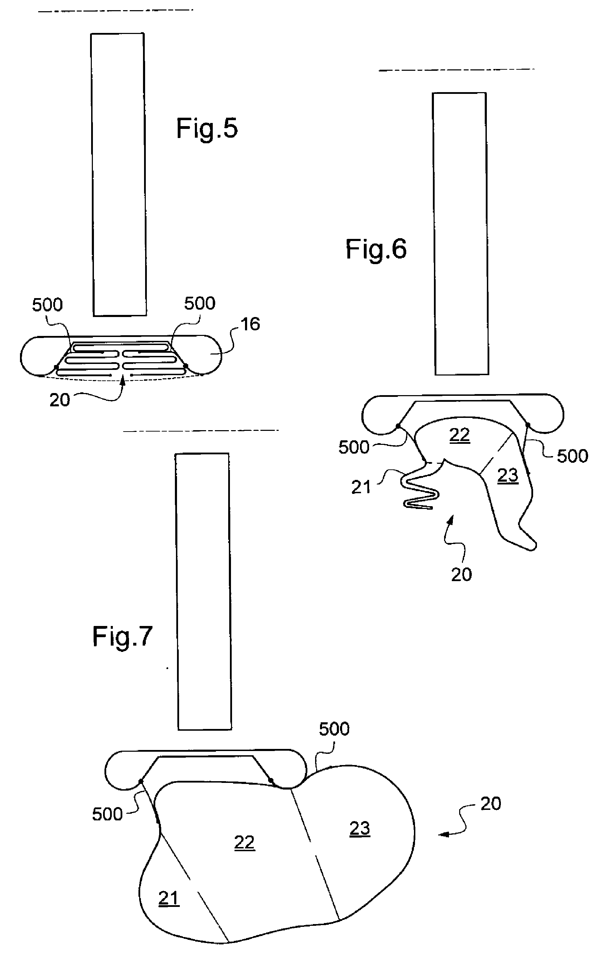

La figure 5 présente une coupe montrant le flotteur 20 plié dans la portion inférieure 16.

Ce flotteur 20 peut notamment être relié à ce carénage par des sangles 500.

En outre, en référence à la figure 2, la portion inférieure 16 peut aussi inclure un moyen de gonflage usuel 50 du flotteur.

Le moyen de gonflage 50 communique avec un système de commande non représenté apte à requérir le déploiement du flotteur 20 hors du carénage 15 dans des conditions prédéterminées.

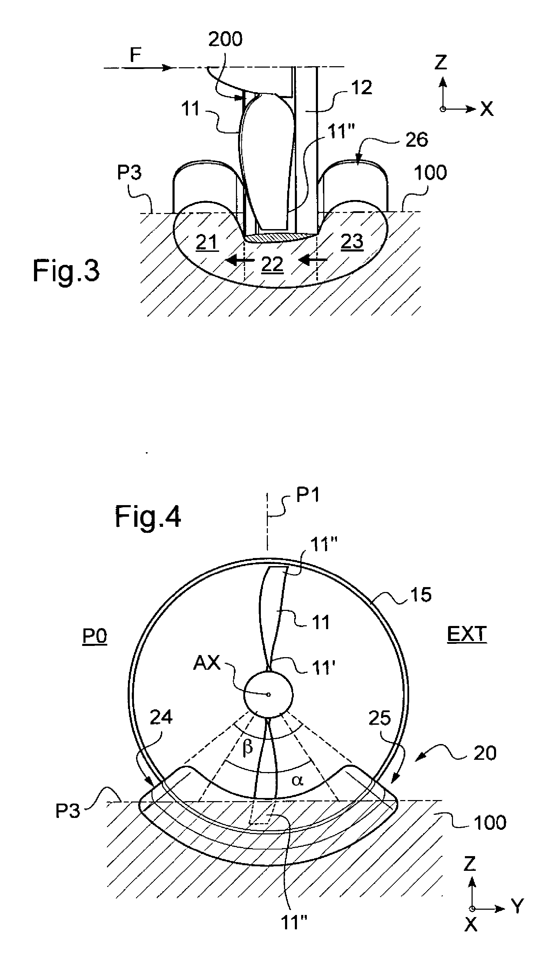

En référence à la figure 3, le moyen de gonflage gonfle le flotteur 20 pour le déployer vers l'extérieur EXT de l'élément tournant, et donc en dehors du volume 200.

On note que le flotteur 20 peut être décomposé en trois portions, correspondant éventuellement à trois outres. Selon le sens de circulation F de l'écoulement de l'air traversant l'élément tournant, le flotteur peut alors comprendre successivement une portion amont 21, une portion centrale 22 à l'aplomb de laquelle se trouvent le carénage 15 et une portion aval 23.

Dès lors, le moyen de gonflage 50 peut déployer le flotteur 20 hors du carénage 15 en gonflant successivement la portion aval 23 puis la portion centrale 22 et enfin la portion amont 21.

Par conséquent, le moyen de gonflage peut injecter un fluide de gonflage dans la portion aval 23, cette portion aval 23 étant en communication avec la portion centrale 22, la portion centrale communiquant avec la portion amont 21.

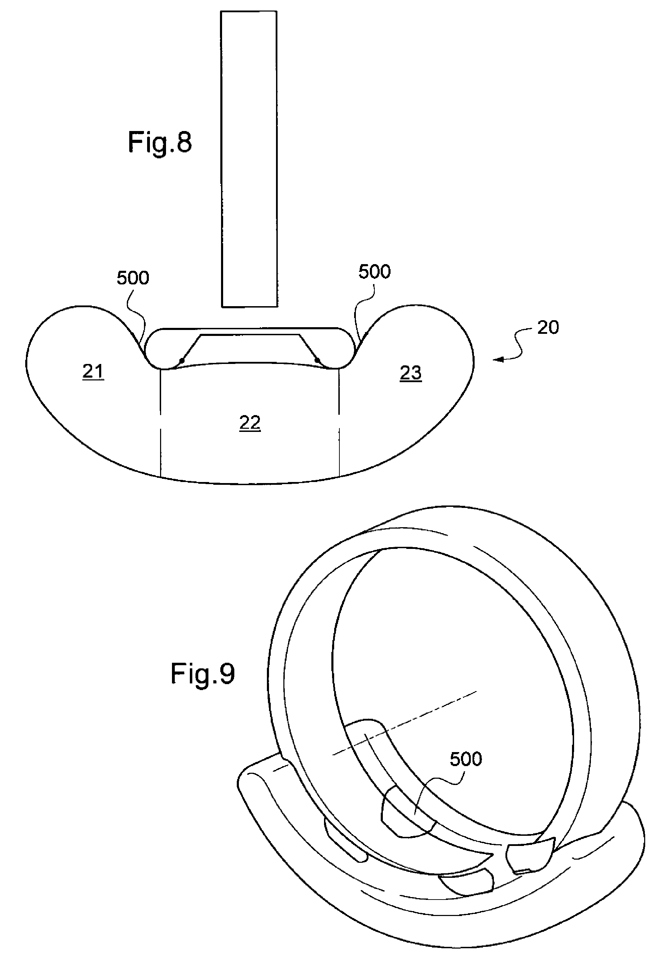

Les figures 6 à 8 présentent une séquence de gonflage du flotteur 20.

En référence à la figure 4, dans la position gonflée, le flotteur 20 peut s'étendre dans le plan vertical de rotation P0 de part et d'autre du plan vertical de symétrie P1, et éventuellement de manière symétrique.

Ainsi, le flotteur 20 peut s'étendre d'une première section extrémale 24 vers une deuxième section extrémale 25 sur arc de cercle du carénage couvrant un secteur angulaire maximale β, de l'ordre de quatre vingt dix degrés par exemple.

Selon un autre aspect, le flotteur peut permettre une immersion partielle du carénage 15 et l'élément tournant en évitant néanmoins une interférence entre la surface liquide et les pales 11.

Lorsque l'aéronef repose sur cette surface liquide avec le flotteur 20 dans une position gonflée, le flotteur 20 remontant le long du carénage 15 de part et d'autre du plan vertical de symétrie P1, un plan horizontal P3 de flottaison étant confondu avec la surface liquide, ce plan horizontal P3 est à l'aplomb d'une extrémité libre 11" des pales, lorsque ces pales évoluent dans un secteur angulaire minimal α donné.

Par contre, on comprend que l'immersion du flotteur doit être limitée à ce plan horizontal P3 pour éviter un contact entre les pales 11 et la surface liquide.

Par conséquent, en référence aux figures 3, 4 et 9, le flotteur 20 peut avoir une forme toroïdale en position gonflée. Cette forme toroïdale peut être générée à partir d'une section notamment en forme de C entourant partiellement le carénage. La forme toroïdale est alors obtenue par une rotation de ladite section autour d'un axe de rotation AX des pales 11 de l'élément tournant 10 sur le secteur angulaire maximal β, une face concave 26 de la section en forme de C étant dirigée vers ledit axe de rotation AX et étant en contact avec le carénage.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Aéronef (1) muni d'au moins un élément tournant (10) pourvu de pales (11) susceptibles d'entrer en contact avec une surface liquide (100) lors d'un amerrissage, ledit aéronef comprenant un système de flottabilité, comportant
un carénage (15) entourant au moins partiellement ledit élément tournant (10), ce carénage (15) comprenant un flotteur (20) gonflable de secours du système de flottabilité pour empêcher lesdites pales (11) d'entrer en contact avec la surface liquide dans une position gonflée,
**caractérisé en ce que** ledit flotteur (20) comporte successivement selon le sens de circulation (F) de l'air au travers de l'élément tournant (10) une portion amont (21) puis une portion centrale (22) disposée sous le carénage (15) et une portion aval (23), l'aéronef (1) comportant un moyen de gonflage (50) pour déployer le flotteur (20) avant un amerrissage en gonflant successivement la portion aval (23) puis la portion centrale (22) et la portion amont (21).

2. Aéronef selon la revendication 1,
**caractérisé en ce que** ledit carénage (15) ayant une portion inférieure (16) en regard du sol lorsque l'aéronef est posé sur ledit sol, le flotteur (20) est plié dans ladite portion inférieure (16) hors phase d'amerrissage pour être dans une position pliée.

3. Aéronef selon l'une quelconque des revendications 1 à 2,
**caractérisé en ce qu'il** comporte un moyen de gonflage (50) pour déployer le flotteur (20) dans la position gonflée avant un amerrissage et vers l'extérieur dudit élément tournant (10), soit en dehors du volume (200) délimité par ledit carénage (15) dans lequel évolue lesdites pales (11).

4. Aéronef selon l'une quelconque des revendications 1 à 3,
**caractérisé en ce que**, ledit moyen de gonflage (50) débouche dans ladite portion aval (23), cette portion aval (23) communiquant avec la portion centrale (22), la portion centrale (22) communiquant avec la portion amont (21).

5. Aéronef selon l'une quelconque des revendications 1 à 4,
**caractérisé en ce que**, ledit flotteur (20) remonte le long dudit carénage (15) de part et d'autre d'un plan vertical de symétrie (P1), le plan vertical de symétrie (P1) passant par l'axe de rotation (AX) des pales (11) de l'élément tournant (15) et en contact avec la surface liquide à l'issue d'un amerrissage.

6. Aéronef selon l'une quelconque des revendications 1 à 5,
**caractérisé en ce que** ledit flotteur (20) a une forme toroïdale en position gonflée générée en faisant effectuer une rotation d'une section en forme de C autour d'un axe de rotation (AX) des pales (11) de l'élément tournant (10), une face concave (26) de la section en forme de C étant dirigée vers ledit axe de rotation (AX).

## Patentansprüche

1. Luftfahrzeug (1) mit mindestens einem sich drehenden Element (10), welches mit Rotorblättern (11) versehen ist, die während einer Wasserlandung in Kontakt mit einer Flüssigkeitsoberfläche (100) treten können, wobei das Luftfahrzeug mit einem Schwimmfähigkeitssystem ausgestattet ist mit einer Umhausung (15), die zumindest teilweise das sich drehende Element (10) umschließt, wobei die Umhausung (15) einen aufblasbaren Notschwimmer des Schwimmfähigkeitssystems aufweist, um in einem aufgeblasenen Zustand zu verhindern, dass die Rotorblätter (11) in Kontakt mit der Flüssigkeitsoberfläche gelangen,
**dadurch gekennzeichnet, dass** der Schwimmer (20) aufeinanderfolgend in Richtung (F) der Luftströmung durch das sich drehende Element (10) einen stromauf liegenden Abschnitt (21), anschließend einen mittleren Abschnitt (22), der unter der Umhausung (15) angeordnet ist, und einen stromab gelegenen Abschnitt (23) aufweist, wobei das Luftfahrzeug (1) ein Aufblasmittel (50) aufweist, zum Aufblasen des Schwimmers (20) vor einer Wasserlandung, indem aufeinanderfolgend der stromab gelegene Abschnitt (23), anschließend der mittlere Abschnitt (22) und der stromauf liegende Abschnitt (21) aufgeblasen werden.

2. Luftfahrzeug nach Anspruch 1,
**dadurch gekennzeichnet, dass** die Umhausung (15) einen unteren Abschnitt (16) gegenüber dem Boden, wenn das Luftfahrzeug auf dem Boden gelandet ist, aufweist, wobei der Schwimmer (20) in dem unteren Bereich (16) gefaltet ist, wenn keine Wasserlandung stattfindet, um in einem gefalteten Zustand zu sein.

3. Luftfahrzeug nach einem der Ansprüche 1 bis 2,
**dadurch gekennzeichnet, dass** es ein Aufblasmittel (50) aufweist, um den Schwimmer (20) in dem aufgeblasenen Zustand vor einer Wasserlandung und außerhalb des sich drehenden Elements (10) zu entfalten, d.h. außerhalb des Raums (200), der durch die Umhausung (15) eingegrenzt wird, in dem sich die Rotorblätter (11) drehen.

4. Luftfahrzeug nach einem der Ansprüche 1 bis 3,
**dadurch gekennzeichnet, dass** das Aufblasmittel (50) in den stromab gelegenen Abschnitt (23) mündet, wobei dieser stromab gelegene Abschnitt (23) mit dem mittleren Abschnitt (22) in Verbindung steht und der mittlere Abschnitt (22) mit dem stromauf gelegenen Abschnitt (21) in Verbindung steht.

5. Luftfahrzeug nach einem der Ansprüche 1 bis 4,
**dadurch gekennzeichnet, dass** der Schwimmer (20) entlang der Umhausung (15) zu beiden Seiten einer senkrechten Symmetrieebene (P1) hochgezogen ist, wobei die senkrechte Symmetrieebene (P1) durch die Drehachse (AX) der Rotorblätter (11) des sich drehenden Elements (15) und in Kontakt mit der Flüssigkeitsoberfläche während einer Wasserlandung verläuft.

6. Luftfahrzeug nach einem der Ansprüche 1 bis 5,
**dadurch gekennzeichnet, dass** der Schwimmer (20) in aufgeblasenem Zustand die Form eines Rings aufweist, die erzeugt wird durch eine Rotation eines C-förmigen Querschnitts um eine Drehachse (AX) der Rotorblätter (11) des sich drehenden Elements (10), wobei eine konkave Seite (26) des C-förmigen Querschnitts zur Drehachse (AX) hin gerichtet ist.

## Claims

1. An aircraft (1) provided with at least one rotary element (10) provided with blades (11) which are liable to come into contact with a liquid surface (100) upon ditching, said aircraft comprising a buoyancy system, comprising a fairing (15) surrounding said rotary element (10) at least in part, this fairing (15) comprising an inflatable emergency float (20) of the buoyancy system in order to prevent said blades (11) from coming into contact with the liquid surface in an inflated position,
**characterised in that** said float (20) comprises in succession, in the direction of circulation (F) of the air through the rotary element (10), an upstream portion (21), then a central portion (22) arranged beneath the fairing (15) and a downstream portion (23), the aircraft (1) comprising an inflation means (50) for deploying the float (20) before ditching by inflating in succession the downstream portion (23), then the central portion (22) and the upstream portion (21).

2. An aircraft according to Claim 1, **characterised in that**, said fairing (15) having a lower portion (16) facing the ground when the aircraft is standing on said ground, the float (20) is folded in said lower portion (16) outside the ditching phase in order to be in a folded position.

3. An aircraft according to any one of Claims 1 to 2, **characterised in that** it comprises an inflation means (50) for deploying the float (20) in the inflated position before ditching and towards the outside of said rotary element (10), namely outside the volume (200) defined by said fairing (15) within which said blades (11) move.

4. An aircraft according to any one of Claims 1 to 3, **characterised in that** said inflation means (50) opens into said downstream portion (23), this downstream portion (23) communicating with the central portion (22), the central portion (22) communicating with the upstream portion (21).

5. An aircraft according to any one of Claims 1 to 4, **characterised in that** said float (20) extends up along said fairing (15) on either side of a vertical plane of symmetry (P1), the vertical plane of symmetry (P1) passing through the axis of rotation (AX) of the blades (11) of the rotary element (15) and in contact with the liquid surface following ditching.

6. An aircraft according to any one of Claims 1 to 5, **characterised in that** said float (20) has a toroidal form in the inflated position which is generated by causing a rotation of a C-shaped section around an axis of rotation (AX) of the blades (11) of the rotary element (10), a concave face (26) of the C-shaped section being directed towards said axis of rotation (AX).
